(19) Europäisches Patentamt
European Patent Office
Office européen des brevets

(11) **EP 3 011 668 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(51) Int Cl.:
***H02M 5/458*** *(2006.01)*     ***H02M 7/5387*** *(2007.01)*
***H02J 3/38*** *(2006.01)*

(21) Anmeldenummer: **13756343.3**

(22) Anmeldetag: **19.08.2013**

(86) Internationale Anmeldenummer:
**PCT/EP2013/067248**

(87) Internationale Veröffentlichungsnummer:
**WO 2015/024583 (26.02.2015 Gazette 2015/08)**

(54) **REGELVERFAHREN FÜR SELBSTGEFÜHRTEN STROMRICHTER ZUR REGLUNG DES LEISTUNGSAUSTAUSCHS**

CONTROL METHOD FOR SELF-COMMUTATED CONVERTER FOR CONTROLLING POWER EXCHANGE

PROCÉDÉ DE RÉGLAGE POUR CONVERTISSEURS À COMMUTATION AUTOMATIQUE, PERMETTANT DE RÉGLER L'ÉCHANGE DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.04.2016 Patentblatt 2016/17**

(73) Patentinhaber: **Siemens Aktiengesellschaft 80333 München (DE)**

(72) Erfinder:
• **BROGAN, Paul Brian**
**G63 9LG Killearn, Glasgow (GB)**
• **JONES, Rodney**
**Audley**
**Stoke on Trent ST7 8DL (GB)**
• **MENKE, Peter**
**96237 Oberfüllbach (DE)**
• **ZUROWSKI, Rainer**
**91301 Forchheim (DE)**

(56) Entgegenhaltungen:
• **BLASCO-GIMENEZ R ET AL: "Distributed Voltage and Frequency Control of Offshore Wind Farms Connected With a Diode-Based HVdc Link", IEEE TRANSACTIONS ON POWER ELECTRONICS, IEEE SERVICE CENTER, PISCATAWAY, NJ, US, Bd. 25, Nr. 12, 1. Dezember 2010 (2010-12-01), Seiten 3095-3105, XP011343844, ISSN: 0885-8993, DOI: 10.1109/TPEL.2010.2086491 in der Anmeldung erwähnt**
• **ROCABERT J ET AL: "Control of Power Converters in AC Microgrids", IEEE TRANSACTIONS ON POWER ELECTRONICS, INSTITUTE OF ELECTRICAL AND ELECTRONICS ENGINEERS, USA, vol. 27, no. 11, 1 November 2012 (2012-11-01), pages 4734-4749, XP011454774, ISSN: 0885-8993, DOI: 10.1109/TPEL.2012.2199334**

**Beschreibung**

Die Erfindung betrifft ein Verfahren zum Regeln eines selbstgeführten Umrichters, der mit weiteren selbstgeführten Umrichtern mittels seines Wechselspannungsanschlusses über ein induktives Bauteil mit einem allen Umrichtern gemeinem Ankopplungspunkt eines Wechselspannungsnetzes mit Nennfrequenz $f_N$ verbunden ist.

Die Erfindung betrifft ferner einen selbstgeführten Umrichter zum Übertragen einer Leistung mit einem Wechselspannungsanschluss zum Anschluss eines Wechselspannungsnetzes, einem Gleichspannungsanschluss zum Anschluss eines Gleichspannungsnetzes und einer Regelungseinheit, die mit ein- und abschaltbaren Leistungshalbleiterschaltern über Steuerungsleitungen verbunden und zum Einstellen der Übertragung der Leistung mit Hilfe eines eingangs genannten Verfahrens eingerichtet ist.

Die Erfindung betrifft ferner einen Windpark mit einer Vielzahl von Windrädern, wobei jedes Windrad einen solchen selbstgeführten Umrichter aufweist.

Ein solches Verfahren, ein solcher selbstgeführter Umrichter und ein solcher Windpark sind aus dem Beitrag von R. Blasco-Gimenez et al., Universidad Polytéchnica de Valencia mit dem Titel "Distributed Voltage and Frequency Control of Off-shore Wind Farms Connected with a Diode Based HVDC link" bereits bekannt. Der besagte selbstgeführte Umrichter ist über einen Gleichspannungszwischenkreis mit einem weiteren Umrichter verbunden, der als Gleichrichter wirkt und seinerseits wechselspannungsseitig mit dem Synchrongenerator einer Windenergieanlage verbunden ist. Im Gegensatz zu den üblichen Regelungsverfahren wird vorgeschlagen, dass mit Hilfe des Wirkstromes die Spannung und mit dem eingestellten Blindstrom die Frequenz des angeschlossenen Wechselspannungsnetzes eingestellt wird. Als Regelverfahren wird eine Stromregelung vorgeschlagen, wobei Sollwerte für den Wirk- und Blindstrom ermittelt und jeweils mit den gemessenen Umrichterströmen unter Bildung von Differenzwerten verglichen werden. Der jeweilige Differenzwert wird einem Regler zugeführt, der für eine entsprechende Ansteuerung des selbstgeführten Umrichters sorgt. Die Sollwerte für den Wirk- und Blindstrom werden mit Hilfe von Reglern auf der Grundlage von zentralen und dezentralen Messungen ermittelt.

Aus dem Beitrag von R. Jocabert et al., mit dem Titel "Control of Power Converters in AC Microgrids", IEEE TRANSACTIONS ON POWER ELECTRONICS, VOL. 27, NO. 11, NOVEMBER 2012, sind auch ein solches Verfahren und ein solcher Umrichter bekannt.

Aufgabe der Erfindung ist es, ein Verfahren der eingangs genannten Art bereitzustellen, das in der Praxis leicht anwendbar und möglichst einfach aufgebaut ist.

Die Erfindung löst diese Aufgabe durch ein Verfahren zum Regeln eines selbstgeführten Umrichters, der mit weiteren selbstgeführten Umrichtern mittels seines Wechselspannungsanschlusses über ein induktives Bauteil mit einem allen Umrichtern gemeinen Ankopplungspunkt eines Wechselspannungsnetzes verbunden ist, bei dem

-    aus einer am Ankopplungspunkt ermittelten Netzspannung $\underline{u}_{VP}$ und einem über das induktive Bauteil fließenden ermittelten Umrichterstrom $\underline{i}_{RE}$ eine Wirkleistung P und eine Frequenz $f_N$ bestimmt werden,

-    die Differenz zwischen der Wirkleistung P und einer vorgegebenen Sollwirkleistung $P_{Soll}$ unter Gewinnung eines Wirkleistungsdifferenzwertes $\Delta P$ und

-    die Differenz zwischen der Frequenz $f_N$ und einer vorgegebenen Soll-Frequenz $F_{Soll}$ unter Gewinnung eines Frequenzdifferenzwertes $\Delta f$ gebildet werden,

-    wobei der Wirkleistungsdifferenzwert $\Delta P$ sowohl einem Orthogonalregler und einem Parallelregler zugeführt wird und

-    wobei mit dem Ausgangswert des Orthogonalreglers die Wirkleistung P bestimmt und mit dem Ausgangswert des Parallelreglers die zwischen Umrichter und Ankopplungspunkt ausgetauschte Blindleistung minimiert werden,

-    wobei der Frequenzdifferenzwert $\Delta f$ einem Frequenzregler zugeführt und der Ausgangswert des Frequenzreglers mit dem Ausgangswert des Orthogonalreglers und dem Ausgangswert des Parallelreglers verknüpft wird, wobei gleichzeitig der Frequenzdifferenzwert $\Delta f$ minimiert wird.

Mit Hilfe des erfindungsgemäßen Verfahrens ist ein selbstgeführter Umrichter zum Übertragen einer Leistung regelbar, der an seinem Wechselspannungsanschluss über ein induktives Bauteil mit einem Hochspannungswechselstromnetz verbindbar ist. Mit dem Begriff "Leistung" ist hier eine Scheinleistung gemeint, die sowohl Wirk- als auch Blindleistung umfasst. Damit das Verfahren im Rahmen der Erfindung praktisch vorteilhaft eingesetzt werden kann, sollte das angeschlossene Hochspannungswechselstromnetz ein schwaches Hochspannungswechselstromnetz sein, das sogar ein Kurzschlussleistungsverhältnis kleiner 2 aufweisen kann. Ein solches Hochspannungswechselstromnetz kann im Rahmen der Erfindung grundsätzlich beliebig ausgestaltet sein. So ist es beispielsweise möglich, dass das Wechselspannungsnetz über eine Gleichspannungsverbindung mit einem starken Versorgungsnetz verbunden ist. Die Gleichspannungsverbindung umfasst vorteilhafterweise einen Diodengleichrichter, der über ein Gleichspannungsnetz mit einem weiteren Umrichter verbunden ist, der an das Versorgungsnetz angeschlossen ist. Dieser Umrichter ist beispielsweise ein selbstgeführter Umrichter, wie beispielsweise ein so genannter Voltage Source Converter (VSC). Alternativ zum Diodengleichrichter kann auch ein fremdgeführter Umrichter, der Thyristoren als Leistungshalbleiterschalter aufweist, mit dem Wechselspannungsnetz verbunden sein. Der fremdgeführte Umrichter ist dann statt des Diodengleichrichters über ein Hochspannungsgleichstromnetz, z.B. einem Gleichspannungszwischenkreis, mit einem VSC verbunden.

Im Rahmen der Erfindung sind die verschiedenen selbstgeführten Umrichter als Regeleinheiten mit einem schwachen Wechselspannungsnetz verbunden. Das Wechselspannungsnetz ist beispielsweise an einen Diodengleichrichter oder einen fremdgeführten Umrichter angeschlossen. Dabei ist das besagte Wechselspannungsnetz für Hochspannungen ausgelegt. Es verfügt beispielsweise über keine eigene Energiequelle und kann allenfalls über eine Hilfsversorgungsleitung begrenzt von außen mit Energie versorgt werden.

Als Maß für ein starkes oder schwaches Wechselspannungsnetz dient dem Fachmann die Kurzschlussleistung $S_k$, die sich aus dem Produkt des Kurzschlussstromes $I_k$ und dem Nennstrom $U_n$ und einem Verkettungsfaktor $\sqrt{3}$ gemäß der Formel $S_k = U_n * I_k * \sqrt{3}$ berechnet. Bezieht man die besagte Kurzschlussleistung bei einem selbstgeführten Umrichter auf die gleichspannungsseitig bereitgestellte Nennwirkleistung $P_{DC}$, ergibt sich das Kurzschlussleistungsverhältnis, das englisch "Short Circuit Ratio" genannt wird, gemäß $SCR = \dfrac{S_k}{P_{DC}}$ .

Im Rahmen der Erfindung kann für jede Regeleinheit, also für jeden selbstgeführten Umrichter, der mit dem erfindungsgemäßen Verfahren geregelt wird, das besagte Kurzschlussleistungsverhältnis im unteren Grenzbereich kleiner als 2 sein. Es kann sich somit um ein schwaches Wechselspannungsnetz handeln, wie dies beispielsweise bei der Ankopplung von Offshore-Windparks an ein landseitiges Versorgungsnetz offshoreseitig auftritt.

Im Rahmen der Erfindung ist daher ein Verfahren bereitgestellt, bei dem die Umrichter der Windenergieanlagen eines Windparks selbstständig ein Wechselspannungsnetz mit der gewünschten Amplitude und Netzfrequenz aufbauen, über das der Windpark beispielsweise mit dem besagten Diodengleichrichter oder dem besagten fremdgeführten Umrichter verbunden ist. Dabei ist jeder selbstgeführte Umrichter über ein induktives Bauteil mit einem allen Umrichtern gemeinen Ankopplungspunkt (englisch: "Point of Common Coupling") des besagten Wechselspannungsnetzes verbunden. Jeder selbstgeführte Umrichter, der mit Hilfe des erfindungsgemäßen Verfahrens geregelt wird, ist beispielsweise in der Gondel der jeweiligen Windenergieanlage angeordnet. Ein fremdgeführter Umrichter ist beispielsweise ein Umrichter, der mit Thyristorventilen bestückt ist. Eine Induktivität ist z.B. ein Transformator, eine Drossel, eine Spule oder ein sonstiges induktives Bauteil.

Im Rahmen der Erfindung wird zunächst die Netzspannung $U_{VP}$ am Ankopplungspunkt (Point of Common Coupling) des Wechselspannungsnetzes erfasst. Hierzu wird mit Hilfe von Messgeräten und Signalverarbeitungsmitteln die besagte Wechselspannung als Raumzeiger $\underset{\rightarrow VP}{u}$ ermittelt, wobei ein solcher Raumzeiger im Folgenden durch einen unter der jeweiligen Größe angeordneten Pfeil gekennzeichnet wird. Komplexe Größen sind unterstrichen. Der Index 1 soll angeben, dass es sich um eine Grundschwingungsgröße handelt. Der Index + und der Index - kennzeichnen das Mitsystem beziehungsweise das Gegensystem. Der Index || und der Index ⊥ geben an, dass diese komplexe Amplituden in Richtung oder senkrecht zum Raumzeiger des Grundschwingungsmitsystems der Netzspannung am Ankopplungs-punkt $\underset{\rightarrow VP}{u}$ verlaufen. Die Ausgangsgrößen der im Rahmen der Erfindung eingesetzten Regler sind klare Größen. Bei einer komplexen Größe mit hochgesetzten Sternen soll es sich um konjugierte komplexe Größen handeln.

Im Rahmen der Erfindung wird neben dem Raumzeiger der Netzspannung $\underset{\rightarrow VP}{u}$ auch der Umrichterstrom ermittelt, wobei auch hier aus den gemessenen Umrichterstromwerten ein Stromraumzeiger $\underset{\rightarrow RE}{i}$ berechnet wird. Der Regelung werden ferner Sollgrößen in Gestalt einer Sollwirkleistung $P_{So.ll}$ und einer Soll-frequenz $F_{Soll}$ als Eingangsgrößen vorgegeben. Die Sollwerte können beispielsweise von einer zentralen Steuerungseinheit, wie beispielsweise einem Windparkpiloten, vorgegeben werden. Darüber hinaus kann jedoch beispielsweise jede Windenergieanlage Funktionseinheiten zur geeigneten Generierung der besagten Sollwerte aufweisen. Mit Hilfe der am Ankopplungspunkt er-mittelten Netzspannung $\underset{\rightarrow VP}{u}$ und dem über das induktive Bauteil fließenden Umrichterstrom kann $\underset{\rightarrow RE}{i}$ eine Wirkleistung P bestimmt werden, die über das induktive Bauteil mit dem schwachen Wechselspannungsnetz ausgetauscht wird. Diese Istwirkleistung wird mit der vorgegebenen Sollwirkleistung $P_{Soll}$ verglichen. Die sich aus diesem Vergleich erge-bende Wirkleistungsdifferenz $\Delta P$ wird im Rahmen der Erfindung sowohl einem Orthogonalregler als auch einem Parallelregler zugeführt. Das Ausgangssignal des Orthogonalreglers entspricht einem Wert, der wiederum dem Betrag eines Spannungsraumzeigers entspricht, der senkrecht auf dem Spannungsraumzeiger des Wechselspannungsnetzes am Ankopplungspunkt steht. Durch diesen Ausgangswert des Orthogonalen-Reglers wird daher im Wesentlichen die ausgetauschte Wirkleistung bestimmt. Dies ist der induktiven Ankopplung des selbstgeführten Umrichters an das Wechselspannungsnetz geschuldet. Der Ausgangswert des Parallel-Reglers minimiert im Rahmen der Erfindung die ausgetauschte Blindleistung. Erfindungsgemäß ist ferner ein Frequenzregler vorgesehen, der dazu dient, dass die vom selbstgeführten Umrichter an seinem Wechselspannungsanschluss bereitgestellte Spannung auch die Frequenz der Netzspannung am Ankopplungspunkt stabilisiert.

Erfindungsgemäß wird auf einen direkten Stromregler verzichtet. Dies ermöglicht einen stabilen Betrieb an einem elektrischen Wechselspannungsnetz, das eine sehr hohe oder nicht lineare Netzimpedanz und das darüber hinaus keine eigene Energiequelle aufweist. Im Rahmen der Erfindung wird die Blindleistung der Regeleinheit nicht direkt geregelt und stellt somit einen Freiheitsgrad im System dar.

Vorteilhafterweise wird dem Ausgangswert des OrthogonalReglers und/oder dem Ausgangswert des Parallelreglers und/oder dem Ausgangswert des Frequenzreglers ein Vorsteuerwert unter Gewinnung eines Orthogonalvorsteuerregleradditionswertes eines Parallelvorsteuerregleradditionswertes beziehungsweise eines Frequenzvorsteuerregleradditionswertes aufaddiert. Durch die Vorsteuerung wird die Dynamik der Regelung erheblich verbessert.

Gemäß einer diesbezüglich zweckmäßigen Weiterentwicklung der Erfindung werden der mit j multiplizierte Orthogonalvorsteuerregleradditionswert und der Parallelvorsteuerregleradditionswert additiv miteinander verknüpft, wobei aus der additiven Verknüpfung eine Amplitude |z| sowie eine Vorfrequenz einer Umrichterspannung $\underset{\to RE}{u}$ ermittelt, die einer Umrichterspannung $\underset{\to RE}{u}$ entspricht, die für eine Übertragung einer Wirkleistung sorgt, die der Sollwirkleistung möglichst entspricht und die die Blindleistung gleichzeitig minimiert.

Gemäß einer weiteren diesbezüglichen Weiterentwicklung wird der Frequenzvorsteuerregleradditionswertes additiv mit dem Vorfrequenzanteil unter Gewinnung der Frequenz der einzustellenden Umrichterspannung verknüpft.

Vorteilhafterweise umfasst der Frequenzvorsteuerregleradditionswert additiv den Ausgang eines Phasensynchronisationsreglers, der die Versorgung des Wechselspannungsnetzes über eine Hilfsversorgungsleitung berücksichtigt.

Gemäß einer diesbezüglich zweckmäßigen Weiterentwicklung wird die Differenz zwischen der Sollhilfswirkleistung $P_{Aux,Soll}$ und der über die Hilfsversorgungsleitung übertragenen Hilfsleistung $P_{Aux}$ unter Gewinnung eines Hilfswirkleistungsdifferenzwertes $\Delta P_{Aux}$ gebildet und der Hilfswirkleistungsdifferenzwert $\Delta P_{Aux}$ dem Phasensynchronisationsregler als Eingangsgröße zugeführt. Somit ist es im Rahmen der Erfindung möglich, eine gewisse und somit in ihrer Leistung begrenzte Energieversorgung des Wechselspannungsnetzes von außen zu berücksichtigen. Dies ist erfindungsgemäß jedoch nur möglich, wenn die Phase als Freiheitsgrad bei der Regelung zur Verfügung steht. Vorteilhafterweise wird daher auf die sonst üblicherweise eingesetzte Parktransformation bei der Ermittlung des Spannungsraumzeigers und des Stromraumzeigers verzichtet. Erfindungsgemäß werden vielmehr bevorzugt die so genannte diskrete Fourier-Transformation DFT und die inverse diskrete Fourier-Transformation IDFT eingesetzt.

Gemäß einer weiteren Variante der Erfindung umfasst der Frequenzvorsteuerregleradditionswert additiv einen Kompensationswinkel $\varphi_{KOMP}$, der die Totzeiteffekte im Regelkreis des Umrichters kompensiert. Die Berücksichtigung von Totzeiteffekten erhöht die Reglergenauigkeit.

Zweckmäßigerweise wird von dem negativen Ausgang des Orthogonal-Reglers ein Vorsteuerwert gemäß der Formel $\underset{\to RE,VOR,\perp}{u} = -j \cdot \frac{2}{3} \cdot \frac{P_{Soll} \cdot X_K}{\left| \underset{\to VP,1+}{u} \right|}$ abgezogen.

Zweckmäßigerweise wird dem negativen Ausgang des Parallelreglers der Betrag der Netzspannung $\underset{\to VP}{u}$ hinzu addiert.

Gemäß einer weiteren Variante wird dem Ausgangswert des Frequenzreglers der ermittelte Frequenzwert der Netzspannung hinzu addiert.

Gemäß einer weiteren Variante wird von dem Frequenzdifferenzwert $\Delta f$ ein Zusatzsollwert $C_Q \cdot Q$ abzogen, der sich aus dem Produkt eines vorgegebenen Blindleistungsparameters $C_Q$ mit einer aus der Netzspannung $\underset{\to VP}{u}$ und Umrichterstrom $\underset{\to RE}{i}$ ermittelten Blindleistung $Q$ ergibt.

Gemäß einer weiteren Variante wird von dem Frequenzdifferenzwert $\Delta f$ ein Zusatzsollwert $C_Q \cdot |Q|$ abzogen, der sich aus dem Produkt eines vorgegebenen Blindleistungsparameters $C_Q$ mit einem aus der Netzspannung $\underset{\to VP}{u}$ und Umrichterstrom $i$ ermittelten Betrag der Blindleistung $Q$ ergibt.

Zweckmäßigerweise wird im Rahmen der Erfindung von der ermittelten Netzspannung $\underset{\to VP}{u}$ lediglich der Mitsystemanteil $\underset{\to VP,1+}{u}$ der Grundschwingung berücksichtigt. Dies vereinfacht die Regelung beträchtlich.

Im Rahmen der Erfindung werden die Netzspannung $\underset{\to VP}{u}$ und der Umrichterstrom $\underset{\to RE}{i}$ mit Hilfe von Messsensoren erfasst, deren Ausgangssignale unter Erhalt von Abtastwerten abgetastet und die Abtastwerte digitalisiert werden, wobei über aufeinander folgende Abtastwerte hinweg gemittelt wird. Das so verfeinerte erfindungsgemäße Verfahren basiert auf der Erfassung eines Spannungsraumzeigers durch geeignete Methoden der Signalverarbeitung, beispielsweise mit einer diskreten Fourier-Transformation mit einem Mittelwertfenster, dessen Fenstergröße dynamisch festgelegt wird. So wird die Anzahl der Abtastwerte und somit beispielsweise die Transmissionslänge des gleitenden Mittelwertfensters durch den Quotienten aus Abtastfrequenz und Netzfrequenz bestimmt. Liegt beispielsweise die Abtastfrequenz bei 5 KHz und die Bezugsfrequenz bei 50 Hz, ergibt sich eine Transformationslänge oder mit anderen Worten die Anzahl der aufeinander folgenden Abtastwerte über die hinweg gemittelt wird, zu 100. Liegt die Netzfrequenz hingegen bei 51 Hz, wird lediglich über 98 Abtastwerte gemittelt.

Weitere zweckmäßige Ausgestaltungen und Vorteile der Erfindung sind Gegenstand der nachfolgenden Beschreibung von Ausführungsbeispielen unter Bezug auf die Figuren der Zeichnung, wobei gleiche Bezugszeichen auf gleich wirkende Bauteile verweisen und wobei

Figur 1    eine Reihe von gleich aufgebauten Umrichtern verdeutlicht, die jeweils über ein induktives Bauteil mit einem Wechselspannungsnetz verbunden sind, wobei das Wechselspannungsnetz ein schwaches Wechselspannungsnetz ist und eine nicht lineare Impedanz aufweist,

Figur 2    in einer Zeigerdarstellung den Einfluss und die Wirkungsweise des Frequenzreglers sowie des Orthogonalen-Reglers darstellt,

Figur 3    das erfindungsgemäße Verfahren schematisch verdeutlicht und

Figur 4    ein Ausführungsbeispiel des erfindungsgemäßen Windparks und des erfindungsgemäßen selbstgeführten Umrichters schematisch zeigt.

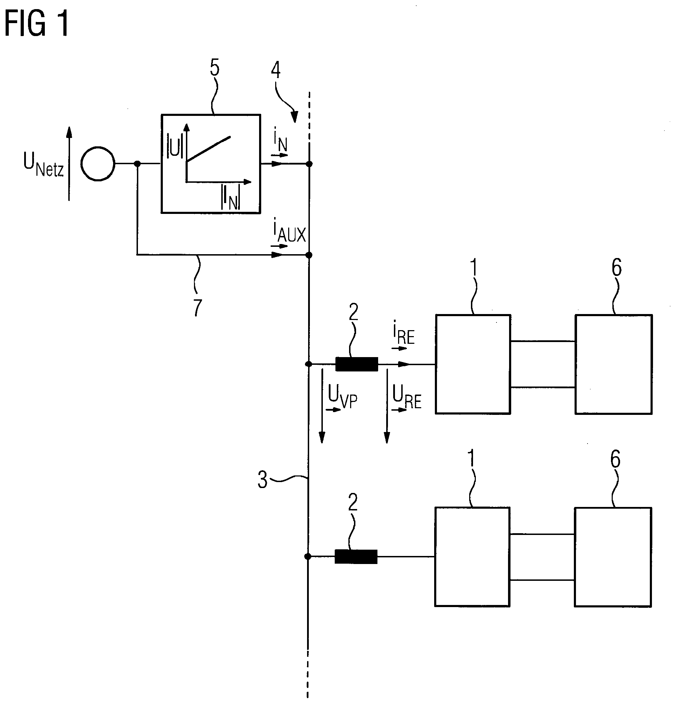

Figur 1 zeigt in einer schematischen Darstellung eine Reihe von selbstgeführten Umrichtern 1, die über ein induktives Bauteil 2 mit einem Ankopplungspunkt 3 eines Wechselspannungsnetzes 4 verbunden ist, dessen Impedanz in dem Schaubild 5 verdeutlicht ist. Es ist erkennbar, dass in dem Wechselspannungsnetz 4 zunächst kein Strom I fließt, bis die Netzspannung $\underset{\to VP}{u}$ eine Schwellenspannung erreicht. Anschließend steigt der Strom mit zunehmender Spannung an, hier beispielhaft linear. Eine solche nichtlineare Impedanz spiegelt das Verhalten eines Wechselspannungsnetzes wider, das über eine Gleichspannungsverbindung mit dem Versorgungsnetz $U_{Netz}$ verbunden ist, wobei die Gleichspannungsverbindung einen nicht gezeigten Diodengleichrichter aufweist. Dabei ist der Wechselspannungsanschluss des Diodengleichrichters mit dem Wechselspannungsnetz 4 verbunden. Der besagte Diodengleichrichter ist mit seinen Gleichspannungsanschlüssen an einen Gleichspannungszwischenkreis oder ein sonstiges Gleichspannungsnetz angeschlossen, das wiederum über einen weiteren Umrichter mit dem Versorgungsnetz $U_{Netz}$ verbunden ist. Solche Netztopologien dienen beispielsweise zur Anbindung eines in einem Meer oder einem See angeordneten Windparks. Aufgrund der Gleichspannungsverbindung kann die vom Windpark erzeugte Leistung auch über weite Strecken verlustarm an das landseitige starke Versorgungsnetz $U_{Netz}$ übertragen werden.

Jeder selbstgeführte Umrichter 1 ist mit einem Energiespeicher 6 verbunden, bei dem es sich beispielsweise um den Kondensator eines Gleichspannungszwischenkreises handelt. In einer bevorzugten Variante ist der Energiespeicher 6 Teil eines Gleichspannungszwischenkreises, der zur gleichspannungsseitigen Verbindung des Umrichters 1 mit einem weiteren Umrichter dient, der in Figur 1 figürlich nicht dargestellt ist. Der nicht gezeigte Umrichter ist wechselspannungsseitig mit einem Generator verbunden, der beispielsweise Teil einer Windenergieanlage ist. Die von den Rotorblättern der Windenergieanlage gewonnene kinetische Energie wird dann durch den Generator in elektrische Energie umgewandelt und diese Energie in dem Energiespeicher 6 zwischengespeichert. Das erfindungsgemäße Verfahren ermöglicht es, das Wechselspannungsnetz 4 mit gewünschter Frequenz und Amplitude aufzubauen, ohne dass es dazu einer separaten eigenständigen Energiequelle mit ausreichend hoher Leistung bedarf. Im Rahmen der Erfindung ist es jedoch möglich, eine in Figur 1 ebenfalls dargestellte Hilfsenergieversorgung zu berücksichtigen. Hierbei handelt es sich beispielsweise um eine einfache Wechselspannungsverbindung, die jedoch in ihrer Spannung, auf beispielsweise 60 kV, begrenzt ist. Mit ihr ist zwar beispielsweise die Ausrichtungen der Rotorblätter der Windenergieanlagen möglich. Der Aufbau eines Wechselspannungsnetzes durch die Hilfsenergieversorgung auf das die Umrichter einfach aufsynchronisieren können, ist im Rahmen der Erfindung nicht mehr erforderlich.

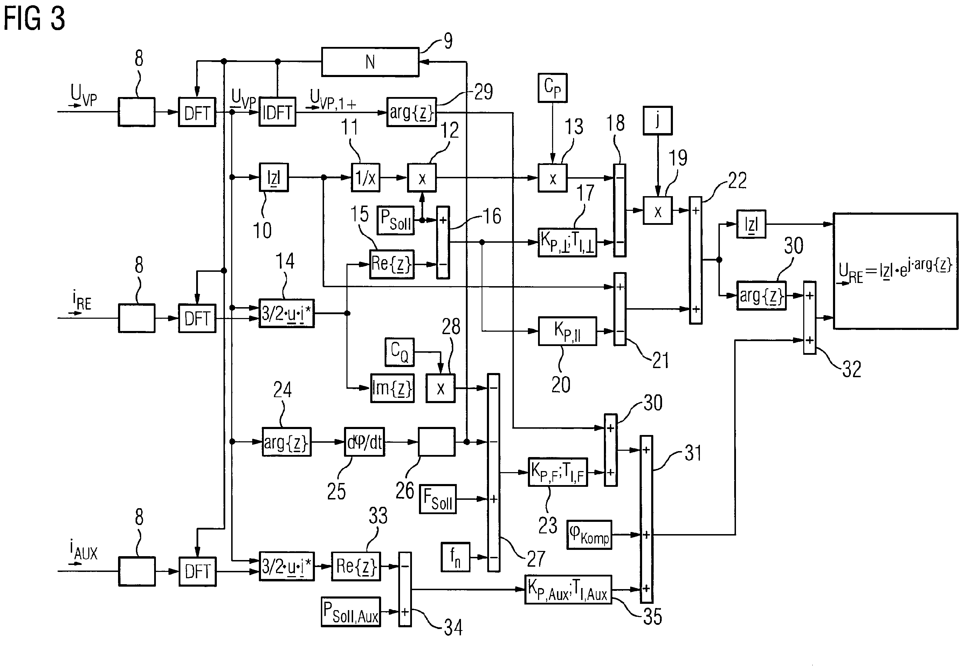

In dem in Figur 3 schematisch gezeigten Ausführungsbeispiel der Erfindung wird die Netzspannung $\underset{\to VP}{u}$ mit Hilfe von Messsensoren erfasst, wobei es sich um ein mehrphasiges Wechselspannungsnetz handelt. Zunächst wird der Raumzeiger der Netzspannung am Ankopplungspunkt 3 ermittelt und einer diskreten Fourier-Transformation (DFT) unterworfen. Der Raumzeiger der Netzspannung wird hier in Polarkoordinaten dargestellt, wobei sich

$$\underset{\rightarrow VP,1+}{u} = \underline{u}_{VP} \cdot e^{j\cdot 2\cdot\pi\cdot f_n\cdot t} \qquad (1)$$

ergibt.

Nach der diskreten Fourier-Transformation werden die komplexe Amplitude der besagten Netzspannung als $|\underline{z}|$ und die die Frequenz enthaltene Phase der Netzspannung als $\arg\{\underline{z}\}$ bestimmt. Darüber hinaus wird auch der über das induktive Bauteil fließende Umrichterstrom $\underset{\rightarrow RE}{i}$ durch Messsensoren erfasst, die zwischen dem Umrichter 1 und dem induktiven Bauteil 2 angeordnet sind. Die dritte Eingangsgröße ist in dem dargestellten Ausführungsbeispiel des erfindungsgemäßen Verfahrens der über die Hilfsversorgungsleitung 7 fließende Hilfsstrom $\underset{\rightarrow AUX}{i}$.

Alle Eingangsgrößen werden mittels eines Glättungsfilters 8 geglättet und anschließend dem Funktionsblock der besagten diskreten Fourier-Transformation (DFT) zugeführt. Bei der Fourier-Transformation wird über N-Abtastwerte gemittelt, wobei Anzahl der Abtastwerte N oder mit anderen Worten die Größe des Mittelungsfensters variabel gehalten und von der jeweils herrschenden Frequenz abhängig gemacht wird. Hierauf wird später noch genauer eingegangen.

Der komplexe Zeiger der Netzspannung $\underset{\rightarrow VP}{u}$ wird eingesetzt, um sowohl die Phase als Winkelargument $\arg\{\underline{z}\}$ als auch Amplitude $|\underline{z}|$ zu bestimmen.

Auf der Grundlage der Formel

$$S_{RE,VP} = \frac{3}{2} \cdot \underset{\rightarrow VP}{u} \cdot \underset{\rightarrow RE}{i}^{*} = P_{RE,VP} + j \cdot Q_{RE,VP} \qquad (2)$$

wird die Scheinleistung $S_{RE,VP}$, bestimmt, wobei $\underset{\rightarrow RE}{i}$ dem Umrichterstrom entspricht. Der Energieaustausch einer jeden Regeleinheit, also eines jeden Umrichters 1 mit dem Wechselspannungsnetz 4, wird durch zwei Komponenten in dem Sollspannungsraumzeiger $\underset{\rightarrow RE}{u}$ des jeweiligen Umrichters erzeugt. Die eine dieser Komponenten ist eine Parallelkomponente $\underset{\rightarrow RE,\|}{u} = c_{\|} \cdot \underset{\rightarrow VP,1+}{u}$. Die Orthogonal-Komponente $\underset{\rightarrow RE,\perp}{u} = j \cdot c_{\perp} \cdot \underset{\rightarrow VP,1+}{u}$ verläuft rechtwinklig zum Netzspannungszeiger. Es wird im Rahmen der Erfindung davon ausgegangen, dass die Ankopplungsimpedanz $\underline{Z}_K$ des induktiven Bauteils 2 für die Grundschwingung einen überwiegend induktiven Anteil aufweist. Dieses Verhalten lässt sich durch die Formel $\underline{Z}_K = \underline{R}_K + jX_K$ mit $(X_K/R_K > 1)$ darstellen. Mit $\underset{\rightarrow RE}{i} = (\underset{\rightarrow VP}{u} - \underset{\rightarrow RE}{u})/\underline{Z}_K$ folgt unter alleiniger Berücksichtigung des Mitsystems

$$S_{RE,VP,1+} = \frac{3}{2} \cdot \left|u_{VP,1+}\right|^2 \cdot \frac{\left[(1-c_{\|}) + j \cdot c_{\perp}\right] \cdot [R_K + j \cdot X_K]}{Z_K^{\ 2}} \qquad (3)$$

und somit für die den Energieaustausch definierenden Wirkleistung

$$P_{RE,VP,1+} = \frac{3}{2} \cdot \frac{\left|u_{VP,1+}\right|^2}{Z_K^{\ 2}} \cdot \left[(1-c_{\|}) \cdot R_K - c_{\perp} \cdot X_K\right]. \qquad (4)$$

Unter Berücksichtigung der hier gegebenen Annahme $X_K/R_K > 1$ folgt

$$P_{RE,VP,1+} = -\frac{3}{2} \cdot \frac{\left|u_{VP,1+}\right|^2}{X_K} \cdot c_\perp \ . \qquad (5)$$

Diese Beziehung wird unter Verwendung des Sollwertes für die Wirkleistung $P_{Soll}$ als Vorsteuerwert für die Orthogonal-Komponente in der Sollspannung von der Regeleinheit eingesetzt:

$$u_{\to RE,VOR,\perp} = -j \cdot \frac{2}{3} \cdot \frac{P_{Soll} \cdot X_K}{\left|u_{\to VP,1+}\right|} \cdot \frac{u_{\to VP,1+}}{\left|u_{\to VP,1+}\right|} \qquad (6)$$

Zusätzlich wird ein Korrekturwert zwecks Kompensation von Ungenauigkeiten für die Orthogonal-Komponente in der Sollspannung von der Regeleinheit überlagert unter Verwendung des Wirkleistungsdifferenzwertes $\Delta P$.

$$u_{\to RE,KOR,\perp} = -j \cdot (K_{P,\perp} \cdot \Delta P + \frac{1}{T_{I,\perp}} \cdot \int \Delta P \cdot dt) \cdot \frac{u_{\to VP,1+}}{\left|u_{\to VP,1+}\right|} \qquad (7)$$

Diese beiden Orthogonalen-Komponenten sind nur zielführend wirksam, wenn in Wechselwirkung mit dem elektrischen Netz 4 ein entsprechender Strom resultiert. Aufgrund der nicht linearen Impedanzcharakteristik 5 wird dieser Strom nicht zwangsläufig entstehen. Deshalb wird die Parallelkomponente in der Sollspannung von der Regeleinheit, also dem Umrichter 1, zusätzlich zum Vorsteuerwert $u_{\to RE,VOR,\|} = c_\| \cdot u_{\to VP,1+} = u_{\to VP,1+}$ (mit $c_{\|\sim 1}$) die Blindleistung am Ankopplungspunkt minimiert, ergänzt um einen Korrekturanteil, der proportional zum Wirkleistungsdifferenzwert $\Delta P$ ist. Es ergibt sich

$$u_{\to RE,\|} = u_{\to RE,VOR,\|} + u_{\to RE,KOR,\|} = \frac{u_{\to VP,1+}}{\left|u_{\to VP,1+}\right|} \cdot \left( \left|u_{\to VP,1+}\right| - K_{P,\|} \cdot \Delta P \right) \ . \qquad (8)$$

Der besagte Korrekturwert wirkt direkt auf den Spannungsbetrag am Ankopplungspunkt durch die starke Rückkopplung über den Impedanzteiler, der aus der Ankopplungsimpedanz $\underline{Z}_K$ und der Netzimpedanz $\underline{Z}_N$ gebildet wird. Für den Fall $i = 0$ folgt aus zwei Maschenumläufen und der Gleichsetzung der zwei Maschenströme $(u_{\to VP} - u_{\to RE})/\underline{Z}_K = (u_{\to N} - u_{\to VP})/\underline{Z}_N$ und weiterhin nach Umstellung einzelner Terme

$$u_{\to VP} = \frac{u_{\to RE}}{1 + \underline{Z}_K / \underline{Z}_N} + u_{\to N} \cdot \frac{\underline{Z}_K / \underline{Z}_N}{1 + \underline{Z}_K / \underline{Z}_N} = u_{\to RE} \cdot \frac{\underline{Z}_N}{\underline{Z}_N + \underline{Z}_K} + u_{\to N} \cdot \frac{\underline{Z}_K}{\underline{Z}_N + \underline{Z}_K} \ .$$

Die Rückkopplung von dem durch den Impedanzteiler $\frac{\underline{Z}_N}{\underline{Z}_N + \underline{Z}_K}$ und $u_{\to RE}$ verursachten Anteil in $u_{\to VP}$ über die Spannungserfassung in die Regeleinheit wird umso schwächer, je stärker das Netz, d.h. je kleiner Betrag $\underline{Z}_N$ ist. Damit erhöht sich nach einer Vorgabe von $P_{Soll<0}$, falls $K_{P\|Soll>0}$, die Spannung am Ankopplungspunkt durch die Rückkopplung über die oben genannte mittelnde Methode der Spannungserfassung.

Figur 3 verdeutlicht die oben genannten Zusammenhänge in einem der Regelung entsprechenden Ablaufdiagramm. Wie bereits ausgeführt wurde, dienen der Raumzeiger der Netzspannung am Ankopplungspunkt $u_{\to VP}$, der über das induktive Bauteil 2 jeweils fließende Umrichterstrom $\underset{\rightarrow RE}{i}$ sowie gegebenenfalls ein über die Hilfsverbindungsleitung 7 fließender Strom $\underset{\rightarrow AUX}{i}$ als Eingangsgrößen für das Regelverfahren, wobei der jeweilige Raumzeiger auf Messungen basierend ermittelt wird. Die besagten Eingangsgrößen werden jeweils in einem Glättungsfilter 8 geglättet und anschließend einer diskreten Fourier-Transformation DFT unterzogen. Die Ausgangsgröße des jeweiligen DFT-Funktionsblocks kann als komplexer Zeiger aufgefasst werden, der sich in karthesischen Koordinaten wie folgt darstellen lässt: $\underline{z}_N = x+jy$. Der Betrag errechnet sich gemäß $\left|\underline{z}\right| = \sqrt{x^2 + y^2}$. Der Winkel, den der Zeiger mit der x-Achse bezüglich des Ursprungs aufspannt, ist $\arg\{\underline{z}\} = a\tan(\frac{x}{y})$.

Aus dem komplexen Zeiger der Netzspannung $\underline{u}_{VP}$ wird durch einen Betragsbildner 10 beispielsweise auf diese Weise der Betrag der Netzspannung bestimmt und durch einen Kehrwertbildner 11 der Kehrwert des Betrags der Netzspannung berechnet. Durch einen Multiplikator 12 wird der besagte Kehrwert mit dem Sollwert der Wirkleistung $P_{soll}$ multipliziert und anschließend mit dem Parameter $C_P$ mittels Multiplikator 13 multipliziert, so dass sich ein Wert gemäß Formel (6) ergibt. Der Term $\dfrac{\underset{\rightarrow}{u}_{VP,1+}}{\left|\underset{\rightarrow}{u}_{VP,1+}\right|}$ in Formel 6 entspricht einem Wert auf dem Einheitskreis, also einem reinen Winkel, der nicht an dieser Stelle der Regelung berücksichtigt werden muss.

Eine Scheinleistungsberechnungseinheit 14 stellt ein Ausgangssignal bereit, das der Scheinleistung entspricht, die über das jeweilige induktive Bauteil 2 ausgetauscht wird, wobei als Eingangsgrößen der Scheinleistungsberechnungseinheit der komplexe Zeiger der Netzspannung $\underset{\rightarrow VP}{u}$ und der konjugiert komplexe Anteil des komplexen Zeigers des Umrichterstromes $\underset{\rightarrow RE}{i}$ dienen. Die beiden Größen werden miteinander multipliziert und anschließend mit dem Faktor 3/2 multipliziert. Die Scheinleistungsberechnungseinheit 14 ist ausgangsseitig mit einem Realteilbildner 15 verbunden, der den Realteil der Scheinleistung, also die Wirkleistung *Pi,* ermittelt und ausgangsseitig ein Signal bereitstellt, das der über das induktive Bauteil 2 ausgetauschten Wirkleistung *P* entspricht. Der Addierer 16 berechnet die Wirkleistungsdifferenz ∆*P* als Differenz *P* zwischen der von einer äußeren Stelle eingegebenen Sollwirkleistung $P_{Soll}$ und der besagten Istwirkleistung *P*, wobei ∆*P* die Eingangsgröße für den PI-Regler 17 ist. Ausgangsseitig des PI-Reglers 17 wird daher ein der Formel (7) entsprechendes Signal bereitgestellt.

Der negative Wert des PI-Reglers (17) und der negative Wert des Multiplizierers (13) werden in dem Addierer 18 aufsummiert, wobei der Multiplikator 19 durch Multiplikation mit j eine Drehung um 90 Grad herbeiführt, so dass der Ausgangswert des Multiplikators dem gewünschten Orthogonalwert entspricht, der rechtwinklig zum Zeiger der Netzspannung verläuft. Die negativen Werte resultieren nur aus der Wahl des Bezugsstromes für $\underset{\rightarrow RE}{i}$ in Figur 1 und kehren sich um, falls der Bezugspfeil um 180° gedreht wird.

Darüber hinaus ist ein Parallelregler 20 bereitgestellt, bei dem es sich um einen Proportionalregler handelt. Als Eingangsgröße für den Parallelregler 20 dient die Wirkleistungsdifferenz ∆*P*, wobei der Ausgangswert des Parallelreglers 20 von einem Vorsteuerwert, nämlich dem Betrag der Netzspannung $\underset{\rightarrow VP}{u}$ gemäß Formel (8) durch den Addierer 21 abgezogen wird. Die Differenzbildung wandelt sich in eine Summenbildung falls die Richtung des Bezugsstromes für $\underset{\rightarrow RE}{i}$ in Bild lumgekehrt wird.

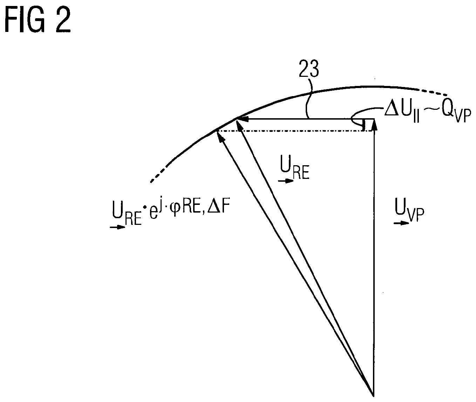

Die Ausgangssignale des Multiplizierers 19 und des Addierers 21 werden durch den Addierer 22 einander aufaddiert, wobei sich ein komplexer Zeiger $\underset{\rightarrow RE}{u}$ ergibt, der in Figur 2 in einem Zeigerdiagramm dargestellt ist. Wie bereits ausgeführt wurde, entspricht die Parallelkomponente möglichst genau dem Zeiger der Netzspannung $\underset{\rightarrow VP}{u}$, wobei die Orthogonal-Komponente, die in Figur 2 mit dem Bezugszeichen 23 bezeichnet ist, die Amplitude des Sollspannungsraumzeigers $\underset{\rightarrow RE}{u}$ wesentlich mitbestimmt. Neb

en der Einstellung der Amplitude der Netzspannung $\underset{\rightarrow VP}{u}$ regelt das erfindungsgemäße Verfahren jedoch auch die Frequenz des Netzspannungsraumzeigers $\underset{\rightarrow VP}{u}$ wobei ein Frequenzregler 23 zum Einsatz gelangt, bei dem es sich wieder um einen PI-Regler handelt. So wird aus dem Raumzeiger der Netzspannung $\underset{\rightarrow VP}{u}$ die Änderung der Netzfrequenz durch den Argumentbildner 24 und den Ableiterbaustein 25 ermittelt, denen ein Glättungsfilter 26 nachgeschaltet ist. Mit Hilfe der Frequenzänderung wird im Mittelungsfensterbildner 9 die Transformationslänge N für die Mittelung der DFT und der inversen diskreten Fourier-Transformation IDFT festgelegt. Die Frequenzänderung und eine vorgegebene Nennfrequenz $f_n$ werden von einem Frequenzsollwert $F_{Soll}$ im Addierer 27 abgezogen. $f_n$ ist beispielsweise 50 Hz oder 60 Hz.

Als Vorsteuerwert wird der Imaginärteil der Scheinleistung durch den Multiplizierer 28 mit einem Systemparameter $C_Q$ multipliziert, wobei das besagte Produkt ebenfalls vom Frequenzsollwert abgezogen wird. Alternativ kann auch der Betrag des Imaginärteils der Scheinleistung mit einem Systemparameter $C_Q$ multipliziert werden. Der Ausgang des Addierers 27 dient als Eingangsgröße für den Frequenzregler 23, so dass sich gemäß der Formel

$$\varphi_{RE,\Delta F} = K_{P,F} \cdot \Delta F + \frac{1}{T_{I,F}} \cdot \int \Delta F \cdot dt \qquad (9)$$

ein zusätzlicher Drehwinkel als Ausgangswert ergibt, der dem Ausgang des Argumentbildners 29 im Addierer 30 durch Addition aufgeschaltet wird. Dem Ausgangswert des Addierers 30 wird durch den Addierer 31 ein Kompensationswinkel $\varphi_{KOMP}$ aufgeschaltet, woraus sich ein Zusatzdrehwinkel $\Delta F$ ergibt, der dem Winkel des Amplitudenreglers mittels des Addierers 32 aufgeschaltet wird.

Der Einfluss der Frequenzregelung ist in Figur 2 schematisch dargestellt. Der Frequenzregelung bewirkt eine Drehung der vom Umrichter bereitgestellten Umrichterspannung $\underset{\rightarrow RE}{u}$ zu $\underset{\rightarrow RE}{u} * e^{(j\varphi_{RE},\Delta F)}$. Die Projektion von $\underset{\rightarrow RE}{u} * e^{(j\varphi_{RE},\Delta F)}$ auf den Zeiger der Netzspannung $\underset{\rightarrow VP}{u}$ ist kleiner als die Projektion von $\underset{\rightarrow RE}{u}$ auf $\underset{\rightarrow VP}{u}$, so dass sich eine Änderung der Parallelspannung $|\Delta u|$ ergibt, die in etwa der über das induktive Bauteil 2 ausgetauschten Blindleistung $Q_{VP}$ entspricht.

Die Drehung des Sollspannungsraumzeigers $\underset{\rightarrow RE}{u}$ bewirkt daher eine Änderung der Blindleistung $Q_{VP}$. Deshalb kann eine Stabilisierung der Frequenzregelung jeder Regeleinheit besonders im Vielfachbetrieb durch eine Korrektur des Sollwertes $F_{Soll}$ mittels eines von $Q_{VP}$, oder alternativ von $Q_{VP}$, abhängigen Anteils erreicht werden.

Die Frequenzregelung definiert die Phase der Spannung bis auf einen konstanten Wert $\varphi_0$. Dieser Freiheitsgrad kann genutzt werden, um eine zusätzlich Regelaufgabe zu erfüllen, beispielsweise die Bereitstellung von Wirkleistung am Anschlusspunkt 3 durch eine zusätzliche Hilfsverbindung 7, wobei die bereitgestellte Hilfswirkleistung $P_{Aux}$ sich dem Realteil (Re) der Hilfsscheinleistung $S_{Aux}$ ergibt, die sich gemäß $S_{Aux} = 3/2 \{ \underset{\rightarrow VP}{u} \cdot \underset{\rightarrow Aux}{i} * \}$ berechnet. Der Hilfswirkleistungswert $P_{Aux}$ entspricht dem Ausgangssignal des Realteilbildners 33. Am Ausgang des Addierers 34 ergibt sich somit ein Signal, das $\Delta P_{Aux} = P_{Soll,Aux} - P_{Au}$ entspricht. $P_{Soll,Aux}$ ist eine von beliebiger Stelle vorgegebene Sollgröße der Regelung, die beispielsweise von einer Windparkzentralregelung stammt, die englisch auch als "Park Pilot" bezeichnet wird. Dieses Signal $\Delta P_{Aux}$ wird einem Phasensynchronisationsregler 35 zugeführt, der ausgangsseitig ein Signal erzeugt, das der Formel

$$\varphi_{RE,Aux} = K_{P,Aux} \cdot \Delta P_{Aux} + \frac{1}{T_{I,Aux}} \cdot \int \Delta P_{Aux} \cdot dt \qquad (10)$$

entspricht. Dieses Ausgangssignal wird dem Addierer 31 zugeführt und somit dem Frequenzreglerausgangssignal zusätzlich aufgeschaltet.

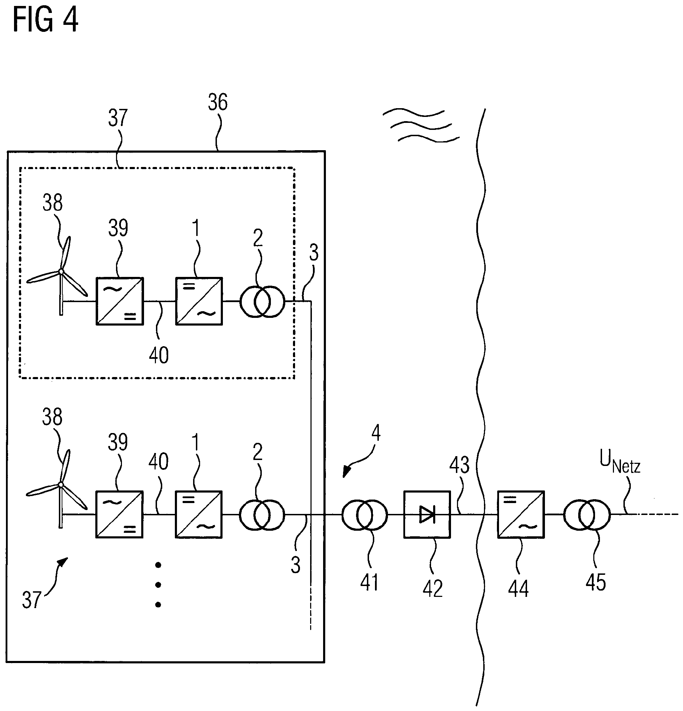

Figur 4 zeigt ein Ausführungsbeispiel des erfindungsgemäßen Windparks 3, der zur Erzeugung von elektrischer Leistung durch Windeinwirkung eingerichtet ist. Wie durch die drei gewellten Linien figürlich angedeutet, ist der dort gezeigte Windpark 36 ist in einem See oder einem Meer angeordnet und verfügt über mehrere Windenergieanlagen 37, die jeweils mit einem Rotorblätter 38 aufweisenden Rotor ausgerüstet sind, der durch den Wind in Drehung versetzt wird. Die Drehung der Rotorblätter 38 wird in einen figürlich nicht dargestellten Generator eingeleitet, der ausgangseitig eine Wechselspannung breitstellt. Der Generator ist mit einem Umrichter 39 verbunden, der als Gleichrichter wirkt und gleichspannungsseitig mit dem erfindungsgemäßen selbstgeführten Umrichter 1 als Regeleinheit für das erfindungsgemäße Verfahren verbunden ist. Die Gleichspannungsverbindung 40, die sich zwischen den Umrichtern 1 und 39 erstreckt ist mit dem besagten, figürlich hier jedoch nicht dargestellte Energiespeicher 6 ausgestattet. Die am dem Energiespeicher 6 abfallende Spannung wird durch den Umrichter 39 auf übliche, dem Fachmann bekannte Weise geregelt. Über einen Transformator, der als Induktivität 2 aufgefasst werden kann ist, ist jeder selbstgeführte Umrichter 1 mit dem seeseitigen Wechselspannungsnetz 4 verbunden. Spannung und Frequenz des Wechselspannungsnetzes 4 werden durch das erfindungsgemäße Regelungsverfahren eingestellt. Hierbei liegt die Spannung vorteilhafterweise im Mittelspannungsbereich (1 kV bis 50 kV) Das Wechselspannungsnetz 4 ist über einen weiteren Transformator 41 mit dem Diodengleichrichter 42 verbunden. Dieser ist seeseitig, in der Nähe des Windparks 36 angeordnet. Der Hochspannungstransformator 41 erzeugt einen Hochspannungs-Wechselstrom von einigen hundert Kilovolt. Der Diodengleichrichter 42 ist Teil einer Gleichspannungsverbindung, die eine Gleichspannungszwischenkreis 43 sowie einen an Land angeordneten Wechselrichter 44 umfasst. Der Wechselrichter 44 ist über einen Transformator 45 an das landseitige Versorgungsnetz angeschlossen. Die gesamte Anlage kann über weitere hier nicht gezeigte Baugruppen wie Drosseln, Filter, Schutzvorrichtungen, Schalter oder Schaltanlagen verfügen. Vorteilhafterweise sind die Umrichter 1 und 39 gemeinsam in einer Gondel der jeweiligen Windenergieanlage 37 angeordnet.

## Patentansprüche

**1.** Verfahren zum Regeln eines selbstgeführten Umrichters (1), der mit weiteren selbstgeführten Umrichtern (1) mittels seines Wechselspannungsanschlusses über ein induktives Bauteil (2) mit einem allen Umrichtern (1) gemeinen Ankopplungspunkt (3) eines Wechselspannungsnetzes (4) verbunden ist, bei dem

- aus einer am Ankopplungspunkt (3) ermittelten Netzspannung $\underset{\to VP}{u}$ und einem über das induktive Bauteil (2) fließenden ermittelten Umrichterstrom $\underset{\to RE}{i}$ eine Wirkleistung P und eine Frequenz $f_N$ bestimmt werden,

- die Differenz zwischen der Wirkleistung P und einer vorgegebenen Sollwirkleistung $P_{Soll}$ unter Gewinnung eines Wirkleistungsdifferenzwertes $\Delta P$ und

- die Differenz zwischen der Frequenz und einer vorgegebenen Soll-Frequenz $F_{Soll}$ unter Gewinnung eines Frequenzdifferenzwertes $\Delta f$ gebildet werden,

- wobei der Wirkleistungsdifferenzwert $\Delta P$ sowohl einem Orthogonalregler (17) und einem Parallelregler (20) zugeführt wird und

- wobei zur Einstellung der Amplitude der Netzspannung mit dem Ausgangswert des Orthogonalreglers (17) die zwischen Umrichter (1) und Ankopplungspunkt (13) ausgetauschte Wirkleistung bestimmt und mit dem Ausgangswert des Parallelreglers (20) die zwischen Umrichter (1) und Ankopplungspunkt (3) ausgetauschte Blindleistung minimiert werden,

- wobei der Frequenzdifferenzwert $\Delta f$ einem Frequenzregler (23) zugeführt und der Ausgangswert des Frequenzreglers (23) mit dem Ausgangswert des Orthogonalreglers (17) und dem Ausgangswert des Parallelreglers (20) verknüpft wird, wobei gleichzeitig der Frequenzdifferenzwert $\Delta f$ minimiert wird.

**2.** Verfahren nach Anspruch 1,
**dadurch gekennzeichnet, dass**
dem Ausgangswert des Orthogonalreglers (17) und/oder dem Ausgangswert des Parallelreglers (20) und/oder dem Ausgangswert des Frequenzreglers (23) ein Vorsteuerwert unter Gewinnung eines Orthogonal-Vorsteuer-Regler-Additionswertes, eines Parallel-Vorsteuer-Regler-Additionswertes bzw. eines Frequenz-Vorsteuer-Regler-Additionswertes aufaddiert wird/werden.

**3.** Verfahren nach Anspruch 2,
**dadurch gekennzeichnet, dass**
der mit j multiplizierte Orthogonal-Vorsteuer-Regler-Additionswert und der Parallel-Vorsteuer-Regler-Additionswert additiv miteinander verknüpft werden und aus der additiven Verknüpfung die Amplitude |z| sowie eine Vor-Phase einer Umrichterspannung $\underset{\to RE}{u} = |z| \cdot e^{j \cdot \arg\{z\}}$ ermittelt werden, die einer Umrichterspannung entspricht, die für die Übertragung einer Wirkleistung P sorgt, die der Sollwirkleistung $P_{soll}$ möglichst entspricht und mit der die Blindleistung minimiert wird.

**4.** Verfahren nach Anspruch 3,
**dadurch gekennzeichnet, dass**
der Frequenz-Vorsteuer-Regler-Additionswert additiv mit der Vor-Phase unter Gewinnung von der Phase der einzustellenden Umrichterspannung verknüpft werden.

5. Verfahren nach Anspruch 4,
**dadurch gekennzeichnet, dass**
der Frequenz-Vorsteuer-Regler-Additionswert additiv den Ausgang eines Phasensynchronisationsreglers (35) umfasst, der die Versorgung des Wechselspannungsnetzes über eine Hilfsversorgungsleitung (7) berücksichtigt.

6. Verfahren nach Anspruch 5,
**dadurch gekennzeichnet, dass**
die Differenz zwischen einer Soll-Hilfswirkleistung $P_{Aux,Soll}$ und der über die Hilfsversorgungsleitung übertragene Hilfswirkleistung $P_{Aux}$ unter Gewinnung eines Hilfswirkleistungsdifferenzwertes $\Delta P_{Aux}$ gebildet und der Hilfswirkleistungsdifferenzwert $\Delta P_{Aux}$ dem Phasensynchronisationsregler (35) als Eingangsgröße zugeführt wird.

7. Verfahren nach einem der Ansprüche 4 bis 5, **dadurch gekennzeichnet, dass**
der Frequenz-Vorsteuer-Regler-Additionswert additiv einen Kompensationswinkel $\varphi_{KOMP}$ umfasst, der die Totzeiteffekte im Regelkreis des Umrichters (1) kompensiert.

8. Verfahren nach Anspruch 2 oder 3,
**dadurch gekennzeichnet, dass**
von dem negativen Ausgang des Orthogonalreglers (17) ein Vorsteuerwert gemäß der Formel

$$\underset{\rightarrow RE,VOR,\perp}{u} = -j \cdot \frac{2}{3} \cdot \frac{P_{Soll} \cdot X_K}{\left| \underset{\rightarrow VP,1+}{u} \right|}$$

abgezogen wird.

9. Verfahren nach Anspruch 2 oder 3,
**dadurch gekennzeichnet, dass**
dem negativen Ausgang des Parallelregels (20) der Betrag der Netzspannung $\left| \underset{\rightarrow VP}{u} \right|$ oder bei umgekehrtem Strombezugspfeil für $\underset{\rightarrow RE}{i}$ der positive Ausgang des Parallelreglers hinzuaddiert wird.

10. Verfahren nach Anspruch 2 oder 3,
**dadurch gekennzeichnet, dass**
dem Ausgangswert des Frequenzreglers (23) die ermittelte Frequenzwert der Netzspannung $\underset{\rightarrow VP}{u}$ als Vorsteuerwert hinzuaddiert wird.

11. Verfahren nach einem der vorhergehenden Ansprüche,
**dadurch gekennzeichnet, dass**
von dem Frequenzdifferenzwert $\Delta f$ ein Zusatzsollwert $C_Q{}^*Q$ abgezogen wird, der sich aus dem Produkt eines vorgegebenen Blindleistungsparamenters $C_Q$ mit einer aus der Netzspannung $\underset{\rightarrow VP}{u}$ und Umrichterstrom $\underset{\rightarrow RE}{i}$ ermittelten Blindleistung Q oder dessen Betrag |Q| ergibt.

12. Verfahren nach einem der vorhergehenden Ansprüche,
**dadurch gekennzeichnet, dass**
von der ermittelten Netzspannung $\underset{\rightarrow VP}{u}$ lediglich der Mitsystemanteil der Grundschwingung berücksichtigt wird.

13. Verfahren nach einem der vorhergehenden Ansprüche,
**dadurch gekennzeichnet, dass**
die Netzspannung $\underset{\rightarrow VP}{u}$ und der Umrichterstrom $\underset{\rightarrow RE}{i}$ mit Hilfe von Messsensoren erfasst, die Ausgangssignale unter Erhalt von Abtastwerten abgetastet und die Abtastwerte digitalisiert werden, wobei über N aufeinanderfolgende digitalisierte Abtastwerte hinweg gemittelt wird.

**14.** Verfahren nach einem der vorhergehenden Ansprüche,
**dadurch gekennzeichnet, dass**
dass das Wechselspannungsnetz (4) über eine Gleichspannungsverbindung (42,43,44) mit einem eine Energiequelle aufweisenden Versorgungsnetz $U_{Netz}$ verbunden ist, wobei die Gleichspannungsverbindung (42,43,44) einen Diodengleichrichter (42) umfasst, der über die Gleichspannungsverbindung(42,43,44) mit einem weiteren Umrichter (44) verbunden ist, der an das Versorgungsnetz $U_{Netz}$ angeschlossen ist.

**15.** Selbstgeführter Umrichter (1) zum Übertragen einer Leistung mit einem Wechselspannungsanschluss zum Anschluss eines Hochspannungswechselstromnetzes (4), einem Gleichspannungsanschluss zum Anschluss eines Gleichspannungsnetzes (40) und einer Regelungseinheit, wobei die Regeleinheit, mit ein- und abschaltbaren Leistungshalbleiterschaltern verbunden und zum Einstellen der Übertragung der Leistung mit Hilfe eines Verfahrens gemäß einem der Ansprüche 1 bis 13 eingerichtet ist.

**16.** Windpark (36) mit einer Vielzahl von Windrädern (37), wobei jedes Windrad (37) einen selbstgeführten Umrichter (1) gemäß Anspruch 14 aufweist, der zum Anschluss an das Wechselspannungsnetz (4) eingerichtet ist.

**17.** Windpark (3) nach Anspruch 16,
**dadurch gekennzeichnet, dass**
die selbstgeführten Umrichter (1) über das Wechselspannungsnetz (4) und über eine Gleichspannungsverbindung (42,43,44) mit einem eine Energiequelle aufweisenden Versorgungsnetz verbunden ist, wobei die Gleichspannungsverbindung einen Diodengleichrichter (42) umfasst, der über ein Gleichspannungsnetz (43) mit einem weiteren Umrichter (44) verbunden ist, der an das Versorgungsnetz $U_{Netz}$ angeschlossen ist

**Claims**

**1.** Method for controlling a self-commutated converter (1), that is connected to further self-commutated converters (1) through its alternating current terminal via an inductive component (2) at a coupling point (3) of an alternating current network (4) that is common to all converters (1), in which

- an active power P and a frequency $f_N$ are determined from a network voltage $\underline{u}_{VP}$ ascertained at the coupling point (3) and a converter current $\underline{i}_{RE}$ ascertained flowing through the inductive component (2),
- the difference between the active power P and a specified setpoint active power $P_{Soll}$ is formed so obtaining an active power difference value ΔP and
- the difference between the frequency and a specified setpoint frequency $F_{Soll}$ is formed so obtaining a frequency difference value Δf,
- wherein the active power difference value ΔP is supplied to both an orthogonal controller (17) and a parallel controller (20), and
- wherein, in order to establish the amplitude of the network voltage, the active power exchanged between the converter (1) and the coupling point (13) is determined with the output value of the orthogonal controller (17), and the reactive power exchanged between the converter (1) and the coupling point (3) is minimized with the output value of the parallel controller (20),
- wherein the frequency difference value Δf is supplied to a frequency controller (23), and the output value of the frequency controller (23) is combined with the output value of the orthogonal controller (17) and the output value of the parallel controller (20), wherein the frequency difference value Δf is minimized at the same time.

**2.** Method according to Claim 1,
**characterized in that**
a pre-control value is added to the output value of the orthogonal controller (17) and/or the output value of the parallel controller (20) and/or the output value of the frequency controller (23) thus obtaining an orthogonal pre-control regulator addition value, a parallel pre-control regulator addition value and/or a frequency pre-control regulator addition value.

**3.** Method according to Claim 2,
**characterized in that**

the orthogonal pre-control regulator addition value multiplied by j and the parallel pre-control regulator addition value are combined with one another additively, and both the amplitude |z| and a pre-phase of a converter voltage $\underset{\rightarrow RE}{u} = \left| z \right| \cdot e^{j \cdot \arg[z]}$ are ascertained from the additive combination, corresponding to a converter voltage that provides for the transmission of an active power P that corresponds as closely as possible to the setpoint active power $P_{Soll}$, and with which the reactive power is minimized.

4. Method according to Claim 3,
   **characterized in that**
   the frequency pre-control regulator addition value is combined additively with the pre-phase, so obtaining the phase of the converter voltage that is to be set.

5. Method according to Claim 4,
   **characterized in that**
   the frequency pre-control regulator addition value additively comprises the output of a phase synchronization controller (35) which takes the supply of the alternating current network through an auxiliary supply line (7) into account.

6. Method according to Claim 5,
   **characterized in that**
   the difference between a setpoint auxiliary active power $P_{Aux,Soll}$ and the auxiliary active power $P_{Aux}$ transmitted via the auxiliary supply line is formed, so obtaining an auxiliary active difference value $\Delta P_{Aux}$, and the auxiliary active power difference value is supplied to the phase synchronization controller (35) as an input magnitude.

7. Method according to one of Claims 4 to 5,
   **characterized in that**
   the frequency pre-control regulator addition value additively comprises a compensation angle $\varphi_{KOMP}$ which compensates for the dead-time effects in the control loop of the converter (1).

8. Method according to Claim 2 or 3,
   **characterized in that**
   a pre-control value obtained from the formula

$$\underset{\rightarrow RE,VOR,\perp}{u} = -j \cdot \frac{2}{3} \cdot \frac{P_{Soll} \cdot X_K}{\left| \underset{\rightarrow VP,1+}{u} \right|}$$

   is subtracted from the negative output of the orthogonal controller (17).

9. Method according to Claim 2 or 3,
   **characterized in that**
   the magnitude of the network voltage $\left| \underset{\rightarrow VP}{u} \right|$, or, if the current reference arrow for $\underset{\rightarrow RE}{i}$ is facing in the opposite direction, the positive output of the parallel controller is added to the negative output of the parallel controller (20).

10. Method according to Claim 2 or 3,
    **characterized in that**
    the ascertained frequency value of the network voltage $\underset{\rightarrow VP}{u}$ as a pre-control value is added to the output value of the frequency controller (23).

11. Method according to one of the previous claims,
    **characterized in that**
    a supplementary setpoint value $C_Q$*Q, which results from the product of a specified reactive power parameter $C_Q$

and a reactive power Q or its magnitude |Q| ascertained from the network voltage $\underline{u}_{VP}$ and the converter current

$\underline{i}_{RE}$ is subtracted from the frequency difference value $\Delta f$.

**12.** Method according to one of the previous claims,
**characterized in that**
only the positive sequence part of the fundamental oscillation is taken into account by the ascertained network voltage $\underline{u}_{VP}$.

**13.** Method according to one of the previous claims,
**characterized in that**
the network voltage $\underline{u}_{VP}$ and the converter current are acquired with the aid of measuring sensors, the output signals are sampled so obtaining sampled values, and the sampled values are digitized, wherein an average is formed over sequential N digitized sampled values.

**14.** Method according to one of the previous claims,
**characterized in that**
the alternating current network (4) is connected through a direct current connection (42, 43, 44) to a power supply network $U_{Netz}$ comprising an energy source wherein the direct current connection (42, 43, 44) comprises a diode rectifier (42) which is connected via the direct current connection (42, 43, 44) to a further converter (44) which is connected to the power supply network $U_{Netz}$.

**15.** Self-commutated converter (1) for transmitting a power with an alternating current terminal for connecting a high-voltage AC electrical network (4), a direct current terminal for connecting a direct current network (40) and a control unit, wherein the control unit is connected to power semiconductor switches that can be switched on or off and is designed to adjust the transmission of the power with the aid of a method according to one of Claims 1 to 13.

**16.** Wind farm (36) with a large number of wind turbines (37), wherein each wind turbine (37) comprises a self-commutated converter (1) according to Claim 14, which is designed for connection to the alternating current network (4).

**17.** Wind farm (3) according to Claim 16,
**characterized in that** the self-commutated converters (1) are connected via the alternating current network (4) and via a direct current connection (42, 43, 44) to a power supply network comprising an energy source, wherein the direct current connection comprises a diode rectifier (42) which is connected via a direct current network (43) to a further converter (44) which is connected to the power supply network $U_{Netz}$.

**Revendications**

**1.** Procédé de réglage d'un convertisseur ( 1 ) à commutation automatique, qui est relié à d'autres convertisseurs ( 1 ) à commutation automatique au moyen de sa borne de tension alternative par un composant ( 2 ) inductif à un point ( 3 ) de couplage, commun à tous les convertisseurs ( 1 ), d'un réseau ( 4 ) à tension alternative, dans lequel

- on détermine une puissance P active et une fréquence $f_N$ à partir d'une tension $\underline{u}_{VP}$ du réseau déterminée au point ( 3 ) de couplage et d'un courant $\underline{i}_{RE}$ de convertisseur déterminé passant dans le composant ( 2 ) inductif,
- on forme la différence entre la puissance P active et une puissance $P_{Soll}$ active de consigne donnée à l'avance en obtenant une valeur $\Delta P$ de différence de puissance active et $\underline{i}_{RE}$
- on forme la différence entre la fréquence et une fréquence $F_{Soll}$ de consigne donnée à l'avance en obtenant une valeur $\Delta f$ de différence de fréquence,
- dans lequel on envoie la valeur $\Delta P$ de différence de puissance active à la fois à un régleur ( 17 ) orthogonal et à un régleur ( 20 ) parallèle et
- dans lequel, pour régler l'amplitude de la tension du réseau, on détermine, par la valeur de sortie du régleur ( 17 ) orthogonal, la puissance active échangée entre le convertisseur ( 1 ) et le point ( 13 ) de couplage et, par la valeur de sortie du régleur ( 20 ) parallèle, on minimise la puissance réactive échangée entre le convertisseur ( 1 ) et le point ( 3 ) de couplage,

- dans lequel on envoie la valeur $\Delta f$ de différence de fréquence à un régleur ( 23 ) de fréquence et on combine la valeur de sortie du régleur ( 23 ) de fréquence à la valeur de sortie du régleur ( 17 ) orthogonal et à la valeur de sortie du régleur ( 20 ) parallèle, la valeur $\Delta f$ de différence de fréquence étant minimisée en même temps.

**2.** Procédé suivant la revendication 1,
**caractérisé en ce que**
on additionne, à la valeur de sortie du régleur ( 17 ) orthogonal et/ou à la valeur de sortie du régleur ( 20 ) parallèle et/ou à la valeur de sortie du régleur ( 23 ) de fréquence, une valeur pilote en obtenant une valeur d'addition régleur orthogonal-pilote, une valeur d'addition régleur parallèle-pilote ou une valeur d'addition régleur de fréquence-pilote.

**3.** Procédé suivant la revendication 2,
**caractérisé en ce que**
on combine entre elles en addition la valeur d'addition régleur orthogonal-pilote multipliée par j et la valeur d'addition régleur parallèle-pilote et on détermine à partir de la combinaison en addition l'amplitude |x|, ainsi qu'une préphase

d'une tension $\underset{\rightarrow RE}{u} = |z| \cdot e^{j \cdot \arg\{z\}}$ de convertisseur, qui correspond à une tension de convertisseur, qui sert au transport d'une puissance P active, qui correspond le plus possible à la puissance $P_{Soll}$ active de consigne et par laquelle la puissance réactive est minimisée.

**4.** Procédé suivant la revendication 3,
**caractérisé en ce que**
la valeur d'addition régleur de fréquence-pilote est combinée en addition avec la préphase en obtenant la phase de la tension de convertisseur à établir.

**5.** Procédé suivant la revendication 4,
**caractérisé en ce que**
la valeur d'addition régleur de fréquence-pilote comprend en addition la sortie d'un régleur ( 35 ) de synchronisation de phase, qui prend en compte l'alimentation du réseau à tension alternative par une ligne ( 7 ) d'alimentation auxiliaire.

**6.** Procédé suivant la revendication 5,
**caractérisé en ce que**
on forme la différence entre une puissance $P_{Aux,Soll}$ active auxiliaire de consigne et la puissance $P_{Aux}$ active auxiliaire transportée par la ligne d'alimentation auxiliaire en obtenant une valeur $\Delta P_{Aux}$ de différence de puissance active auxiliaire et on envoie la valeur $\Delta P_{Aux}$ de différence de puissance active auxiliaire au régleur ( 35 ) de synchronisation de phase comme grandeur d'entrée.

**7.** Procédé suivant l'une des revendications 4 à 5,
**caractérisé en ce que**
la valeur d'addition régleur de fréquence-pilote comprend en addition un angle $\varphi_{KOMP}$ de compensation, qui compense les effets de temps mort dans le circuit de réglage du convertisseur ( 1 ).

**8.** Procédé suivant la revendication 2 ou 3,
**caractérisé en ce que**
on déduit, de la sortie négative du régleur ( 17 ) orthogonal, une valeur pilote suivant la formule

$$\underset{\rightarrow RE,VOR,\perp}{u} = -j \cdot \frac{2}{3} \cdot \frac{P_{Soll} \cdot X_K}{\left| \underset{\rightarrow VP,1+}{u} \right|}$$

**9.** Procédé suivant la revendication 2 ou 3,
**caractérisé en ce que**

on ajoute, à la sortie négative du régleur ( 20 ) parallèle, la valeur absolue de la tension $\left|\underset{\rightarrow VP}{u}\right|$ ou si le sens de la flèche de référence du courant est inversée pour $\underset{\rightarrow RE}{i}$ , à la sortie positive du régleur parallèle.

**10.** Procédé suivant la revendication 2 ou 3,
**caractérisé en ce que**

on ajoute, comme valeur pilote, la valeur de fréquence déterminée de tension $\underset{\rightarrow VP}{u}$ du réseau à la valeur de sortie du régleur ( 23 ) de fréquence.

**11.** Procédé suivant l'une des revendications précédentes,
**caractérisé en ce que**

on déduit, de la valeur $\Delta f$ de différence de fréquence, une valeur $C_Q{}^*Q$ de consigne supplémentaire, qui provient du produit d'un paramètre $C_Q$ de puissance réactive donnée à l'avance par une puissance Q réactive déterminée à partir de la tension $\underset{\rightarrow VP}{u}$ du réseau et du courant $\underset{RE}{i}$ du convertisseur ou de sa valeur absolue |Q|.

**12.** Procédé suivant l'une des revendications précédentes,
**caractérisé en ce que**

on prend en compte, de la tension $\underset{\rightarrow VP}{u}$ du réseau déterminée, seulement la proportion de système direct du mode fondamental.

**13.** Procédé suivant l'une des revendications précédentes,
**caractérisé en ce que**

on détecte la tension $\underset{\rightarrow VP}{u}$ du réseau et le courant $\underset{RE}{i}$ du convertisseur à l'aide de capteurs de mesure, qui détectent des signaux de sortie en obtenant des valeurs de détection et on numérise les valeurs de détection en faisant la moyenne de N valeurs de détection numérisées successives.

**14.** Procédé suivant l'une des revendications précédentes,
**caractérisé en ce que**
le réseau ( 4 ) à tension alternative est relié à un réseau $U_{Netz}$ d'alimentation ayant une source d'énergie par une liaison ( 42, 43, 44 ) à tension continue, la liaison ( 42, 43, 44 ) à tension continue comprenant un redresseur ( 42 ) à diode, qui est relié par la liaison ( 42, 43, 44 ) à tension continue à un autre convertisseur ( 44 ), lequel est raccordé au réseau $U_{Netz}$ d'alimentation.

**15.** Convertisseur ( 1 ) à commutation automatique pour le transport d'une puissance, comprenant une borne de tension alternative pour le raccordement d'un réseau ( 4 ) à courant alternatif à haute tension, une borne de tension continue pour le raccordement d'un réseau ( 40 ) à tension continue et une unité de réglage, l'unité de réglage étant reliée à des interrupteurs à semiconducteurs de puissance pouvant être fermés et ouverts et étant conçus pour régler le transport de la puissance à l'aide d'un procédé suivant l'une des revendications 1 à 13.

**16.** Parc ( 36 ) éolien ayant une pluralité de roues ( 37 ) éoliennes, chaque roue ( 37 ) éolienne ayant un convertisseur ( 1 ) à commutation automatique suivant la revendication 14, qui est conçu se connecter au réseau ( 4 ) à tension alternative.

**17.** Parc ( 36 ) éolien suivant la revendication 16,
**caractérisé en ce que**
le convertisseur ( 1 ) à commutation automatique est relié à un réseau d'alimentation ayant une source d'énergie par le réseau ( 4 ) à tension alternative et par une liaison ( 42, 43, 44 ) à tension continue, la liaison à tension continue comprenant un redresseur ( 42 ) à diode, qui est relié par un réseau ( 43 ) à tension continue à un autre convertisseur ( 44 ) raccordé au réseau $U_{Netz}$ d'alimentation.

# FIG 1

# FIG 2

FIG 3

$$\underline{U}_{RE} = |\underline{z}| \cdot e^{j \cdot \arg\{\underline{z}\}}$$

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. JOCABERT et al.** Control of Power Converters in AC Microgrids. *IEEE TRANSACTIONS ON POWER ELECTRONICS,* November 2012, vol. 27 (11